# EUROPÄISCHE PATENTSCHRIFT

(11) **EP 2 401 347 B1**
(45) Veröffentlichungstag und Bekanntmachung des Hinweises auf die Patenterteilung: **23.07.2014**
(21) Anmeldenummer: 10714843.9
(22) Anmeldetag: 24.02.2010
(51) Int. Cl.: C10L 5/44

(54) **VERFAHREN ZUR GEWINNUNG VON ROHSTOFF UND ENERGIETRÄGERN AUS PFLANZEN UND PFLANZENRESTEN**
PROCESS FOR OBTAINING RAW MATERIAL AND ENERGY SOURCES FROM PLANTS AND PLANT RESIDUES
PROCÉDÉ DE PRODUCTION DE MATIÈRE PREMIÈRE ET DE SOURCES D'ÉNERGIE À PARTIR DE VÉGÉTAUX ET DE DÉBRIS DE VÉGÉTAUX

(30) Priorität: 24.02.2009 DE 102009010233
(43) Veröffentlichungstag der Anmeldung: 04.01.2012
(73) Patentinhaber: Revatec GmbH, 48455 Bad Bentheim (DE)
(72) Erfinder: SCHLITT, Rainer, 36326 Antrifttal-Ruhlkirchen (DE); ALTENSEN, Birgit, 35325 Mücke (DE); RICHARTS, Fritz, 52223 Stolberg (DE); SPANTIG, Anke, 12687 Berlin (DE)
(74) Vertreter: Stenger, Watzke & Ring
(86) Internationale Anmeldenummer: PCT/DE2010/000199
(87) Internationale Veröffentlichungsnummer: WO 2010/097073

(56) Entgegenhaltungen:
- EP-A1- 1 970 431
- WO-A2-2008/138637
- DE-A1-102007 022 840
- A. RAJU, C. PARK, J. NORBECK: "Synthesis gas production using steam hydrogasification and steam reforming" FUEL PROCESSING TECHNOLOGY, Bd. 90, Nr. 2, 20. Januar 2009 (2009-01-20), Seiten 330-336, XP002586266

## Beschreibung

### Stand der Technik

In der zukünftigen Gewinnung von Rohstoffen und Energieträgern wird der Biomassenutzung eine größer werdende Bedeutung zukommen als bisher. Über die Verwendung als Grundlage für die Nahrungsmittelproduktion hinaus wird zur Zeit auch die Möglichkeit, Biomasse als Rohstoff für die industrielle Produktion in größerem Umfang als bisher einzusetzen, weiter entwickelt. Ebenso werden weltweit Anstrengungen unternommen, die Biomasse als Energieträger zu nutzen oder die in ihr enthaltene chemisch gebundene Energie in eine nutzbare Energieform umzuwandeln. Die derzeit in der Anwendung und in der Entwicklung befindlichen Verfahren der Energiegewinnung aus Biomasse weisen große Unterschiede auf: Sowohl hinsichtlich der Art der eingesetzten Biomasse als auch hinsichtlich der Anwendung der Energieträger auf der Basis von Biomasse. Der weitaus überwiegende Teil dieser Verfahren zielt auf eine stromwirtschaftliche Nutzung der Biomasse oder auf die Bereitstellung von Flüssigkraftstoffen ab. Nur wenige haben die Bereitstellung von Energieträgern für die Wärme- bzw. Stromversorgung zum Ziel.

Die meisten Verfahren der energetischen Nutzung von Biomasse sind auf bestimmte Biomassearten ausgerichtet. Insbesondere werden in anspruchsvollen Verfahren der Stromerzeugung und der Biokraftstoffgewinnung ganz bestimmte, hierfür speziell ausgewählte und ausschließlich zu diesem Zweck kultivierte Pflanzen ("Energie-pflanzen") verwendet.

In den zurückliegenden Jahren wurde ein Verfahren vorgeschlagen, aus jedweder verfügbarer, naturbelassener Biomasse Pflanzenkohle zu erzeugen. Das Verfahren wurde in Deutschland und auch weltweit bekannt unter der Bezeichnung "Hydrothermale Carbonisierung" (HTC). Erste Untersuchungen dazu wurden weltweit durchgeführt. Eine detaillierte Beschreibung und eine besondere Verfahrensweise mit verschiedenen Möglichkeiten zur Ausgestaltung dieses Verfahrens ist in der DE 10 2008 028 953 beschrieben. Bei diesem Verfahren wird die Biomasse in einem Reaktor, der vollständig mit Prozesswasser gefüllt ist. bei hohem Druck und hoher Temperatur karbonisiert.

DE102007022840 beschreibt ein Verfahren zur hydrothermalen Carbonisierung mittels Wasserdampf

Der Prozess, mit dem die Biomasse aus dem Rohzustand in Kohle (Pflanzenkohle) umgewandelt wird, läuft in seinen Grundfunktionen wie folgt ab: Die Rohbiomasse (Holz, Pflanzenteile, z. B. Stroh, Pflanzenreste) wird zerkleinert, z. B. in Partikelgrößen zwischen 5 und 50 mm Länge. Die meistens noch feuchte Biomasse wird in ein Wasserbad getaucht und in einen druckfesten Reaktionsbehälter gefüllt. Der Behälterinhalt wird von Umgebungstemperatur auf die gewünschte Reaktionstemperatur, z. B. 180 °C, erwärmt. Dabei muss der Behälterdruck auf ein Niveau angehoben werden, das über dem Wert liegt, der dem Verdampfungsdruck bei der eingestellten Prozesstemperatur entspricht. Die Aufwärmphase erfordert eine Wärmezufuhr von Außen durch eine externe Heizquelle, z. B. in Form eines Thermalölsystems oder einer Heißwasserheizanlage oder einer Hochdruckdampfanlage. In der anschließenden Reaktionsphase wird anfänglich noch eine Wärmezufuhr benötigt, die einen Ausgleich für die Wärmeverluste des Reaktors nach Außen schafft. Im weiteren Verlauf tritt der Prozess in eine exotherme Phase ein, bei der ein Teil der in der Biomasse chemisch gebundenen Energie in Wärme umgewandelt wird. Dies führt zu einer Erhöhung der Temperatur im Reaktionsbehälter. In dieser Phase muss durch Kühlung des Behälters ein zu großer Temperaturanstieg und damit verbundener Druckanstieg gesichert verhindert werden. Zur Intensivierung und Beschleunigung der Reaktion wird ein chemischer Katalysator, z. B. Zitronensäure, beigemischt.

Nach Ablauf des Carbonisierungsprozesses wird der Behälter soweit abgekühlt, dass eine gefahrlose Druckminderung auf Umgebungsdruckniveau möglich ist. Der Behälter wird anschließend geöffnet und entleert. Die Kohle wird aus dem Prozesswasser gefiltert, mechanisch entwässert und aufbereitet. Sie steht dann in Form von Pellets oder Briketts oder auch als Kohlenstaub für eine Verwendung als Rohstoff oder Primärenergieträger zur Verfügung. Das Prozesswasser enthält einen großen Teil der in den Pflanzen befindlichen Mineralstoffe als Salze und Schwebstoffe. Diese können als Dünger einer landwirtschaftlichen Nutzung zugeführt werden.

Eine Variante zu dem vorbeschriebenen Prozess mit diskontinuierlichem Ablauf ist die Umsetzung dieses Verfahrens in einem kontinuierlichen Prozess. Dabei wird mittels hydromechanischer Schleusen das Einsatzmaterial durchlaufend auf einen hohen Druck gebracht und in einer Vorwärmstufe auf die Prozesstemperatur erwärmt. In der anschließenden Reaktionsstufe findet der Carbonisierungsvorgang statt, bei dem das Material (Biomasse und Reaktionswasser) kontinuierlich bis zum Ausgang des Durchlaufreaktors strömt, der am Ende der geforderten Verweilzeit erreicht wird. In der nachfolgenden Kühlstufe wird das aus dem Reaktor austretende Material auf Umgebungstemperatur abgekühlt. Mit Hilfe einer weiteren hydromechanischen Schleuse findet eine Druckabsenkung auf Umgebungsniveau statt. Das Reaktionsprodukt wird getrennt und die gewonnene Kohle in der oben beschriebenen Weise weiterverwendet. Die Umsetzung des HTC-Verfahrens in diesem kontinuierlichen Prozess ist wegen der hohen Betriebsdrücke und der dadurch an die Druckschleusen gestellten Anforderungen als ungesichert einzustufen. Wegen der großen Verweilzeiten werden auch große Reaktionsbehälter benötigt. Auch hier erscheint eine wirtschaftlich tragbare Lösung in Form einer kontinuierlich arbeitenden Carbonisierungsanlage wenig wahrscheinlich.

Der Heizenergiebedarf für die Erwärmung des Reaktionsbehälters und dessen Inhalt auf die erforderliche Reaktionstemperatur beträgt ca. 5 bis 10 % der im Heizwert der produzierten Kohle chemisch gebundenen Energie.

Die hydrothermale Karbonisierung arbeitet bedingt durch das Siedeverhalten des als Reaktionsmedium verwendeten Wassers mit einem Prozessdruck, der gesichert höher ist als der Siededruck entsprechend der Reaktionstemperatur. Diese Prozessführung erfordert dadurch zusätzliche sicherheitstechnische Maßnahmen und Vorrichtungen, die eine ungewollte Druckabsenkung und damit einen instabilen und sicherheitstechnisch kritischen Zustand verhindern. Dadurch ergeben sich eine aufwendige Ausführung der Prozessanlage und hohe Sicherheitsanforderungen an die Prozessführung.

Ansätze zur Gewinnung von H₂ als Energieträger, Kraftstoff oder Rohstoff in einem vergleichbaren thermischen Verfahren wurden bisher nicht gemacht. Eine Wasserstoffgewinnung bei der hydrothermalen Biomasseumwandlung scheitert an der raschen Reaktion des nach Aufspalten der Kohlewasserstoffverbindungen der Biomasse freigewordenen H₂ mit dem in der Flüssigphase und im Substrat vorhandenen Sauerstoff zu Wasser. Die bei dieser Reaktion freiwerdende "Verbrennungsenthalpie" ist maßgeblich an der Entstehung der exothermen Vorgänge beteiligt, die während des Karbonisierungsprozesses beobachtet werden. Entwicklungen zur Gewinnung von Wasserstoff aus Biomassen befassen sich bisher u. a. mit der Methanerzeugung (Biogasgewinnung mittels Fermentierung) mit anschließender Methanreformierung oder mit der pyrolytischen Vergasung von Biomasse.

### Vorschlag für eine neue Methode zur thermischen Behandlung von Biomasse zum Zweck der Rohstoff- und Energieträgergewinnung

Das hier vorgeschlagene Verfahren wandelt ähnlich wie bei hydrothermalen Carbonisierung (HTC) die Biomasse mittels Einwirkung von Wärme auf einem vergleichbaren Temperaturniveau, z. B. bei 180 °C, in Pflanzenkohle um, die ebenfalls als Rohstoff- oder Energieträger weiter genutzt werden kann.

Der Unterschied zu dem bekannten Verfahren der HTC besteht darin, dass die Reaktion nicht ausschließlich in einem flüssigen, sondern überwiegend oder ausschließlich in einem gasförmigen oder dampfförmigen Medium stattfindet. Dabei wird dem Reaktionsbehälter, in den die Biomasse eingebracht wird, Wärme mittels Heißgas oder Heizdampf (Sattdampf oder überhitzter Dampf) zugeführt. Bei der Verwendung von Heißgas kann der Prozess drucklos, das heißt mit Umgebungsdruck, oder auch mit geringfügig erhöhtem Behälterdruck, betrieben werden. Wird Dampf als Heizmittel eingesetzt, so bestimmt die Temperatur, mit der die Reaktion ablaufen soll, den Behälterdruck, entsprechend der Dampfdruckkurve von Wasser. Wird der Prozess z. B. bei 180 °C betrieben, dann resultiert daraus ein Behälterdruck von 10 bar.

Der mit Heißgas oder mit Dampf betriebene Carbonisierungsprozess kann sowohl diskontinuierlich in Autoklaven als auch kontinuierlich in Durchlaufreaktoren durchgeführt werden.

Das hier vorgeschlagene Verfahren der Karbonisierung zielt darauf ab, die Komplikationen der Heißwasser-Prozessführung mittels Ersatz der Flüssigphase durch die Dampfphase oder die Gasphase zu vermeiden. Im Gegensatz zur Hytrothermalen Carbonisierung (HTC) befindet sich keine Flüssigphase in nennenswertem Umfang im Reaktionsbehälter. Dieses Verfahren wird als daher vapohydrothermale Carbonisierung (VHTC) oder bei Vorliegen der alleinigen Dampfphase als Vapothermale Carbonisierung (VTC) bezeichnet. Findet die Carbonisierung in einer Heißgasatmosphäre statt, dann wird der Prozess als Heißgascarbonisierung (HGC) bezeichnet. Es ist auch möglich, zur kurzzeitigen Erhöhung des Temperaturniveaus im Reaktor den Dampfprozeß der VCT mit der Heißgascarbonisierung (HGC) zu kombinieren. Dieser Prozess stellt damit die Dampf-Heißgas-Carbonisierung (DHC) dar.

Bei der hier vorgeschlagenen Methode zur Carbonisierung wird das Substrat (Biomasse) nach mechanischer Aufbereitung, z. B. Zerkleinerung in Partikelgrößen von 10 bis 50 mm Maximallänge, in einer korbartigen Vorrichtung (Substratkorb) in den Reaktionsbehälter (Autoklav) gebracht. Dort wird der allseits geschlossene, mit wasser- oder dampfdurchlässigen Umschließungsflächen ausgestattete Substratkorb in eine Befestigungsvorrichtung eingehängt. Im Falle der Heißgascarbonisierung wird der Reaktionsbehälter mittels Heißgasleitungen und Ventilen an einen Heißgaserzeuger angeschlossen und die Biomasse auf das gewünschte Temperaturniveau aufgeheizt. Bei der vapohydrothermalen Carbonisierung (VHTC) wird im noch drucklosen Zustand das Reaktionswasser zugegeben. Sodann wird der Reaktionsbehälter druckfest verschlossen und es wird mittels Rohrleitung und Ventilen Hochdruck-Heißdampf oder Sattdampf in den Behälter eingeleitet. Für die vapothermale Cabonisierung (VTC) ist eine Zugabe von Reaktionswasser nicht zwingend erforderlich.

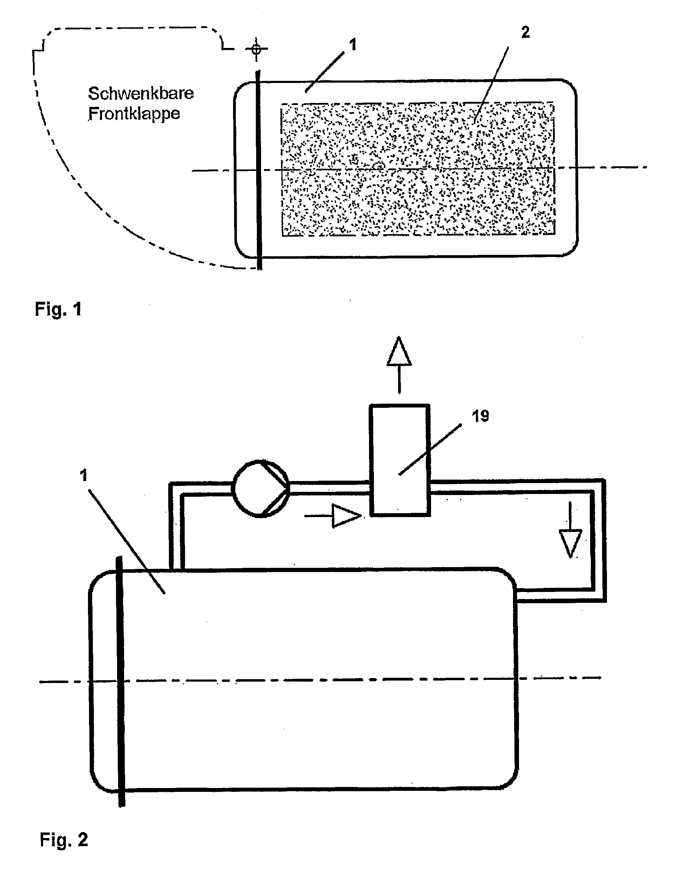

Die vorbeschriebene Anwendung des mit Heißdampf betriebenen Verfahrens (VTC) findet vorzugsweise in einem als Autoklav ausgeführten Reaktionsbehälter 1, wie er in Figur 1 dargestellt ist, statt. Dabei läuft die Reaktion in einem zyklischen Prozess ab (Batch-Betrieb). Nach Einbringen des mit Biomasse gefüllten Substratkorbes 2 wird der Behälter 1 druckfest verschlossen und es wird Heißdampf eingeleitet. Dabei erhöhen sich Druck und Temperatur im Reaktionsbehälter 1. Nach Erreichen des gewünschten Temperaturniveaus wird die Dampfzufuhr soweit verringert, dass keine weitere Druckerhöhung stattfindet. Der zugeführte Dampf dient dann ausschließlich der Deckung der Wärmeverluste des Behälters durch Wärmestrahlung und Wärmeleitung nach außen.

Die thermalen Karbonisierungsprozesse zeichnen sich vor allem dadurch aus, dass nach Erreichen der Reaktionstemperatur exotherme Reaktionen stattfinden, die bei hydrothermaler Prozessführung eine Kühlung des Behälterinhalts erfordern, um ein Überschreiten des maximal zulässigen Drucks zu verhindern. Bei der vapothermalen Prozessführung kann die Druckbegrenzung mit einem Überdruckventil 6 erreicht werden, das im Falle einer Wärmefreisetzung in der reagierenden Biomasse den Behälterdruck auf den zulässigen Wert begrenzt. Dabei wird die freiwerdende Wärme in dem Dampf gebunden, der durch Verdampfen des in der Biomasse enthaltenen Wassers und des vorher bei der Aufheizung des Behälters 1 entstandenen Kondensates erzeugt wird.

Nach Erreichen der erforderlichen Reaktionsdauer wird der Behälter 1 durch Öffnen eines Ventils 9 und Ablassen des Dampfes druckentlastet, bis im Behälter 1 kein Überdruck gegenüber der Umgebung vorliegt. Dabei kühlt sich das im Behälter 1 befindliche Wasser auf ca. 100 °C ab. Auch das Endprodukt der Reaktion, die erzeugte Pflanzenkohle, folgt zeitverzögert dieser Abkühlung. Nach Erreichen des drucklosen Zustands wird der Behälter 1 geöffnet und der Substratkorb 2 mit der Pflanzenkohle entnommen. Eine weitere Abkühlung des Behälterinhalts findet anschließend statt durch Wärmeabgabe an die Umgebungsluft.

### Weitere Ausgestaltung des Verfahrens

### • Beschleunigung des Reaktionsvorganges durch Beigabe eines Katalysators

Bei der hydrothermalen Carbonisierung wird der Prozess beschleunigt durch Beigabe eines Katalysators, z. B. Zitronensäure, in das Reaktionswasser. In dem Heißgasprozess kann die Katalysatorwirkung erzielt werden, indem der Katalysator in Form von säurebildenden Salzen oder als Granulat der Biomasse vor Einbringung in den Reaktionsbehälter beigegeben wird.

### • Katalytische Vorbehandlung der Biomasse

Durch Verweilen der Biomasse in einem unter Umgebungstemperatur stehenden oder erwärmten und mit Katalysator dotierten Prozesswasserbad vor Einbringen in den Reaktionsbehälter 1 wird die Biomasse soweit vorbehandelt, dass die Zugabe von Katalysatormaterial in den Reaktionsbehälter 1 wirksam verringer werden oder sogar vollständig entfallen kann. Zusätzlich wird in diesem Fall der Prozess im Reaktionsbehälter 1 in erheblichem Umfang beschleunigt und die Verweilzeit wesentlich verkürzt.

### • Verzicht auf die Flüssigphase und ausschließliche Reaktion in der Dampfphase

Bei geeigneter katalytischer Vorbehandlung der Biomasse findetder Prozess ohne Eintauchen der Biomasse in die Flüssigphase während der Reaktion statt

Auf das Einbringen einer Prozesswassermenge in den Reaktionsbehälter zu Beginn des Prozesses wird vollständig verzichtet. Nach Verschließen des Autoklaven wird Hochdruckdampf in den Reaktor eingeleitet und damit das Substrat und die im Substrat befindliche Restwassermenge erwärmt. Gleichzeitig erhöht sich der Druck im Behälter soweit, bis der Siededruck entsprechend der gewünschten Reaktionstemperatur erreicht ist.

### • Abtrennung des Wasserstoffs

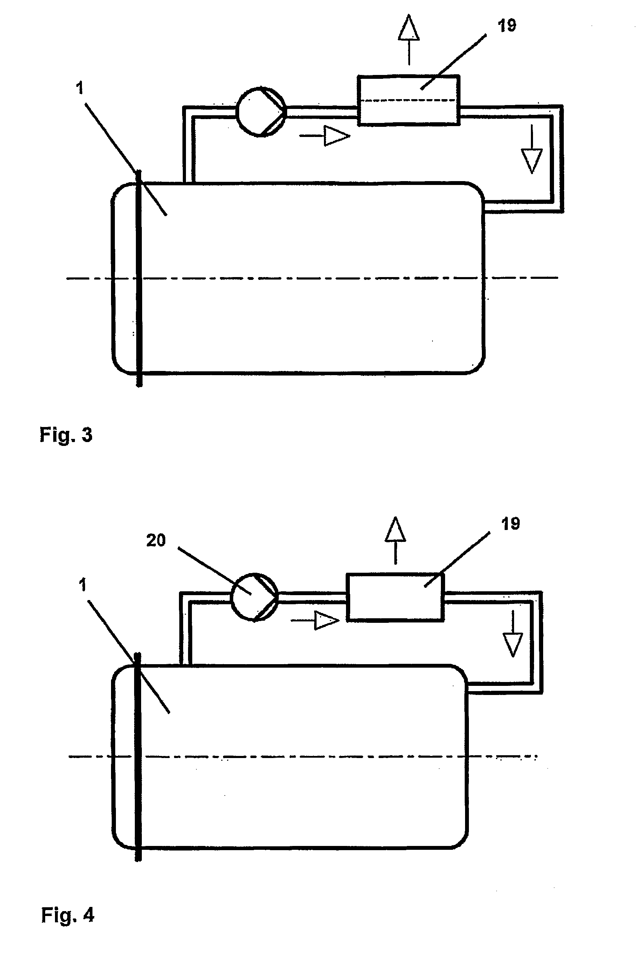

In diesem Zusammenhang zeigt Figur 2 eine Vorrichtung zur Absaugung und Abtrennung des im Reaktionsbehälter 1 entstehenden Wasserstoffs. Zur Abtrennung des H₂-Gases aus der Gasphase wird das Gasvolumen aus dem Reaktionsbehälter 1 abgesaugt und durch einen Absetzbehälter 19 geleitet. In dem Absetzbehälter 19 trennt sich das leichte H₂-Gas vom schwereren CO₂ und H₂O-Dampf selbsttätig und kann am oberen Teil des Behälters 19 entnommen werden. Der angesaugte, vom Wasserstoff gereinigte Gasstrom wird kontinuierlich in den Reaktionsbehälter 1 zurückgeführt. Eine weitere Möglichkeit zur Trennung des H₂-Gases von den übrigen Komponenten der Gasphase ist in Figur 3 dargestellt. Die Gastrennung erfolgt bei dieser technischen Lösung mit Hilfe von Membranen.

### • Transport des gasförmigen Reaktorinhalts zur Abtrennvorrichtung und zurück in den Reaktionsbehälter

Zum kontrollierten Transport eines definierten Volumenstromes aus dem Reaktionsbehälter 1 zu der außen liegenden Trennvorrichtung 19 kann ein Heißgasgebläse 20 eingesetzt werden, das die Druckverluste in den durchströmten Anlagenteilen ausgleicht. Die anlagentechnische Realisierung dieser technischen Lösung wird in Figur 4 gezeigt.

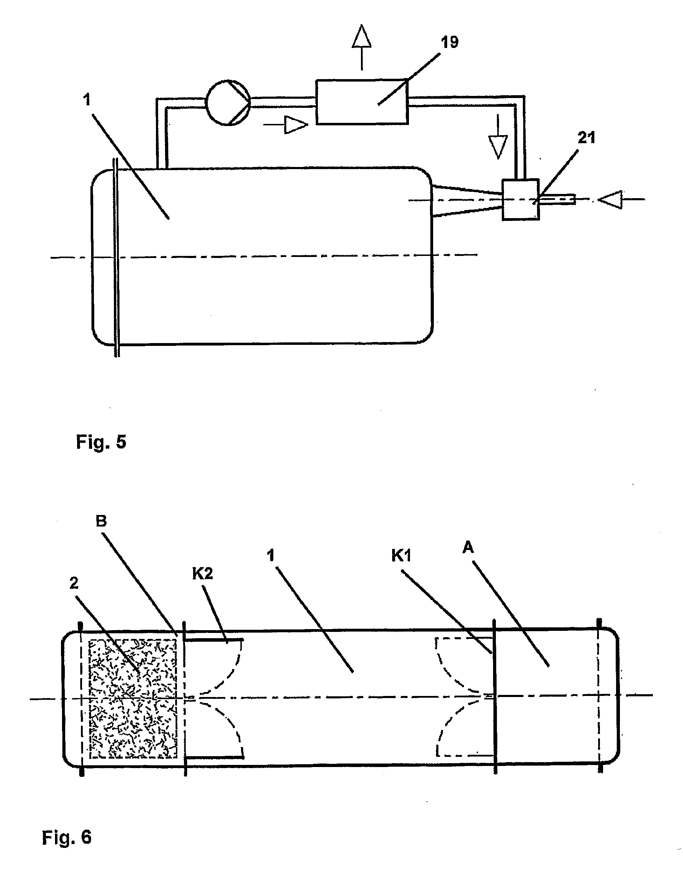

Ferner ist es denkbar, den Gastransport mittels eines durch Hochdruckdampf (HD-D) angetriebenen Injektors 21, wie er in Figur 5 zu sehen ist, durchzuführen. Mit einem derartigen dampfgetriebenen Injektor ist es ferner möglich, alternativ oder in Ergänzung zu der zuvor beschriebenen Lösung den für die Beheizung, den Druckaufbau und/oder den für die Druckhaltung benötigten HD-Dampf dem Reaktionsbehälter zuzuleiten..

### • Konversion der in der karbonisierten Biomasse eingekoppelten chemischen Energie in Wasserstoff

Im Anschluss an die Herstellung der Pflanzenkohle aus Biomasse mittels VHTC oder VTC kann in einer zweistufigen Prozessführung die in der Kohle eingebundene chemische Energie vollständig in Wasserstoff als Energieträger eingekoppelt werden. In der ersten Umwandlungsstufe wird der Kohlenstoff der Pflanzekohle in einem Vergasungsprozess mit Wasserdampf in CO und H₂ umgewandelt: C + H₂O → CO + H₂ . In einer zweiten Umwandlungsstufe wird mittels als Shift-Reaktion bekanntem Prozess das CO in Anwesenheit von Wasserdampf in CO₂ und H₂ umgewandelt: CO + H₂O → CO₂ + H₂.

### • Druckbegrenzung durch Wassereindüsung

Eine unzulässige hohe Druckerhöhung, die wegen der während der Reaktionsphase ablaufenden exothermen Reaktion, auftritt, kann neben der oben beschriebenen Möglichkeit der Druckbegrenzung durch Öffnen eines Überdruckventils 6 auch dadurch vermieden werden, dass in den Behälter Wasser eingedüst wird. Das in der Reaktionsphase eingedüste Wasser erwärmt sich auf Siedetemperatur (=Reaktionstemperatur) wird zumindest teilweise verdampft und nimmt somit die entstandene Wärme auf.

### • Anwendung der Vapothermalen Cabonisierung in einem Durchlaufverfahren

In Figur 6 ist eine Vorrichtung, in der ein Verfahren zur Vapothermalen Cabonisierung von Biomasse ausführbar ist, dargestellt. Neben der zuvor beschriebenen Anwendung des mit Heißdampf betriebenen Verfahrens im zyklischen Betrieb als Batch-Prozeß ist auch ein kontinuierlicher Durchlaufbetrieb möglich.

Dabei wird die Biomasse in eine Eingangskammer A eingebracht. Diese hat eine druckfest verschließbare Öffnung (Eingangsklappen K1) zum ständig unter Druck stehenden Reaktionsbehälter 1. Nach druckdichter Schließung der Eintrittsöffnung wird durch Fluten der Eingangskammer mit Dampf der Druck soweit erhöht, dass ein geringfügiger Überdruck zum Druck im Reaktionsbehälter 1 entsteht. Hierbei findet die Erwärmung des Substrates auf die erforderliche Reaktionstemperatur statt. Durch den geringen Überdruck öffnen sich die Klappen K1 zwischen der Eingangskammer A und dem Reaktionsbehälter 1. Der in der Eingangskammer befindliche Substratkorb wird durch diese Öffnung in den Reaktionsbehälter geschoben. Anschließend werden die Klappen K1 verschlossen. Nunmehr wird die Eingangskammer A durch Öffnen eines Druckreduzierventils 9 druckentlastet. Eine selbsttätige Dichtwirkung tritt ein, wenn bei Druckentlastung der Kammer A die Druckdifferenz zwischen dem Reaktionsbehälter 1 und der Kammer A größer wird. Die zunehmende Druckkraft erhöht an den Dichtflächen der Klappen K1 die Dichtwirkung. Die Eingangskammer ist für die Beladung mit dem nächsten Substratkorb 2 bereit.

Das Ausschleusen der Substratkörbe 2 mit der carboniserten Biomasse erfolgt nach dem gleichen Prinzip. Zur Vorbereitung des Ausschleusvorganges wird die Ausgangskammer C nach Außen druckfest verschlossen. Danach wird sie durch Einleiten von Dampf geflutet und auf einen gegenüber dem Druck im Reaktionsbehälter 1 geringfügig erhöhten Wert komprimiert. Die Klappen K2 der Schließvorrichtung zwischen dem Reaktionsbehälter 1 und der Ausgangskammer C öffnen sich und der Weg zum Transport des am Ende befindlichen Substratkorbes 2 ist frei. Dieser wird durch die Öffnung in die Ausgangskammer geschoben. Nach Schließen der Klappen K2 wird die Ausgangskammer C durch Dampfablassen druckentlastet. Nach Druckausgleich mit der Umgebung wird die Ausgangskammer geöffnet und der Substratkorb mit der erzeugten Pflanzenkohle entnommen. Nach Schließen der Ausgangskammer und erneutem Fluten mit Hochdruckdampf steht diese für die Aufnahme des nächsten Substratkorbes bereit.

### • Dampfeinsparung beim Durchlaufreaktor durch Druckausgleich zwischen Eingangs- und Ausgangskammer

Die für den vorbeschriebenen Durchlaufprozeß benötigte Heizdampfmenge kann durch eine Verbindungsleitung zwischen dem Eingangsbehälter A und dem Ausgangsbehälter B nachhaltig verringert werden. In diesem Fall verlaufen die Druck-aufbau- und Druckentlastungsphasen nicht in einer, sondern in jeweils zwei Stufen ab. In Stufe 1 wird der Behälter A auf einen mittleren Druck durch Druckausgleich mit dem anfänglich drucklosen Behälter C druckentlastet, wobei der Druck in Behälter C auf diesen mittleren Druck ansteigt. Durch Öffnen eines Ventils zur Umgebung wird der Behälter A auf Umgebungsdruck expandiert. Der Behälter C wird durch Einleitung von Heizdampf auf den gewünschten Enddruck komprimiert.

Bei Druckabsenkung der Ausgangskammer C nach erfolgter Ausschleusung eines Substratkorbes 2 aus dem Reaktionsbehälter 1 wird die auf Umgebungsdruckniveau befindliche Eingangskammer A durch Druckausgleich mit Kammer C verdichtet, in dem der in der Kammer A befindliche Dampf zunächst in die Kammer C eingeleitet wird. Nach Erreichen des Ausgleichsdrucks wird der Druck in Kammer C durch Einleitung von Heizdampf weiter erhöht, bis der gewünschte Enddruck erreicht wird. Gleichzeitig wird durch Abblasen des restlichen Dampfes der Kammer A auf Umgebungsdruck dekomprimiert.

### • Kombination von mit Dampf und mit Heißgas betriebenem Reaktor HGC

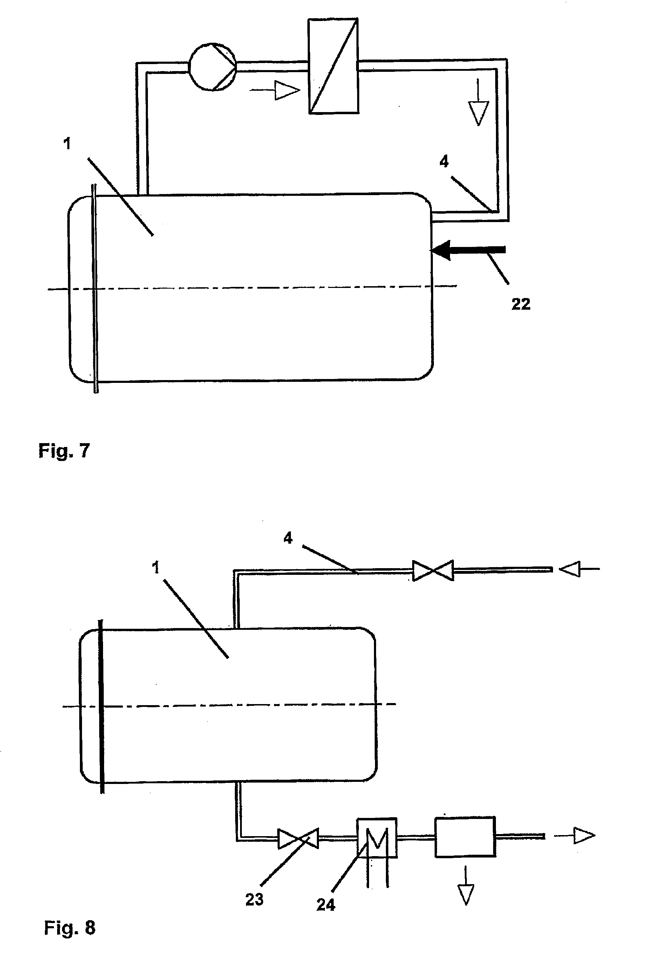

Für den mit Dampf betriebenen Prozess stellt die Druckfestigkeit des Reaktionsbehälters eine begrenzende Größe dar. Zur Lösung des Problems ist in Figur 7 eine Vorrichtung dargestellt, in der ein kombinierter Prozess zur Erzeugung von Kohle aus Biomasse, in dem sowohl Wasserdampf als auch Heißgas verwendet wird, dargestellt.

Beim Betrieb des Reaktionsbehälters 1 wird die Reaktionstemperatur entsprechend der Siedelinie von Wasserdampf begrenzt. In bestimmten Fällen kann die Reaktion wesentlich intensiviert werden, in dem die Temperatur Ober diese Grenze hinaus noch weiter erhöht wird. Nach Erreichen der druckbedingten Siedetemperatur im Reaktionsbehälter 1 kann die Behältertemperatur weiter gesteigert werden, in dem ein Heißgaskreislauf zu dem Reaktor hinzugeschaltet wird. Die sich dabei im Reaktionsbehälter 1 bildende Atmosphäre aus zumindest teilweise überhitztem Dampf und Heißgas erhöht die Reaktionsgeschwindigkeit und ermöglicht eine höhere Reaktionsleistung der Carbonisierungsanlage.

### • Auskopplung von Wärme aus dem Reaktionswasser

Am Ende der Reaktion befindet sich Reaktionswasser im Behälter. Dieses setzt sich zusammen aus der teilweise aus der Biomasse ausgetriebenen Feuchtigkeit, der gegebenenfalls vor Reaktionsbeginn in den Reaktionsbehälter zusätzlich eingebrachten Wassermenge bei der vapohydrothemalen Prozessführung und dem Kondensat des zugeführten Dampfes. Bei Reaktionsende steht diese Wassermenge unter hohem Druck und hoher Temperatur. Die darin enthaltene Wärme kann auf hohem Temperaturniveau ausgekoppelt werden, indem das Wasser bei hohem Druck durch Einleiten von weiterem Dampf in den Behälter durch ein Ablassventil 24 am Behälterboden aus dem Behälter verdrängt, durch einen Kühler 24 geführt und nach Abkühlung auf eine Temperatur von unter 100 °C über ein Druckreduzierventil 9 auf Umgebungsdruck entspannt wird. Eine Auskopplung von Niedertemperaturwärme ist zusätzlich möglich durch weitere Abkühlung des Reaktionswassers in einer zweiten Kühlstufe. Anschließend lässt sich das Reaktionswasser in einer Reinigungsstufe soweit abreinigen, dass es wiederverwendet oder als Abwasser entsorgt werden kann. Mit der in Figur 8 dargestellten Anlage ist die zuvor beschriebene, effektive Nutzung von Abwärme zu realisieren.

### • Rückführung des Reaktionswassers als Kesselspeisewasser für die Dampferzeugung

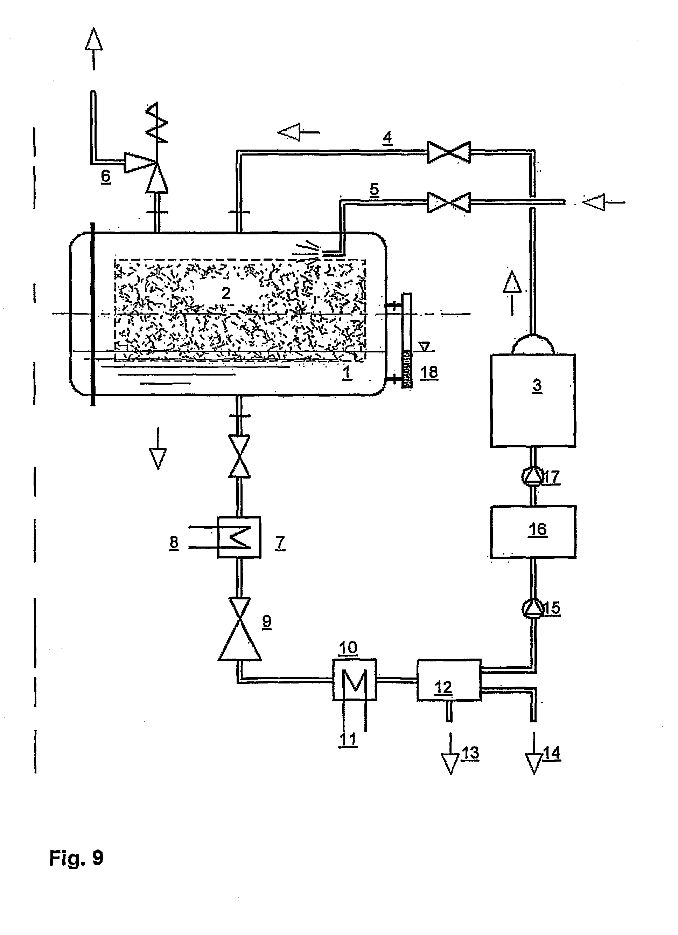

Eine Anlage, mit der eine weitere Nutzung des nach Ende der Reaktionsphase und Druckabbau im Reaktionsbehälter verbleibenden Wassers ermöglicht wird, ist in Figur 9 dargestellt. Mit der dargestellten Anlage kann ein erheblicher Teil des Reaktionswassers als Speisewasser in einen Dampferzeuger, insbesondere in einen Dampfkessel, zurückgeführt werden. Das Wasser wird in diesem Fall einem Dampferzeuger zugeleitet, nachdem dieses durch eine Abwasserreinigungsanlage von allen störenden und den Dampferzeuger gefährdenden Bestandteilen gereinigt wurde. Die dafür benötigte Wasserreinigungsanlage kann als Filteranlage, Ultrafiltration oder als Umkehrosmose ausgeführt werden.

### Vorteile des hier beschriebenen Verfahrens gegen über dem Stand der Technik

Gegenüber den bisher bekannten Verfahren zur Herstellung von Pflanzenkohle mittels Hydrothermaler Carbonisierung ergeben sich bei diesem Verfahren folgende Vorteile:
- Durch wesentlich verringerte oder vollständig entfallende Wassermenge im Reaktor wird der Energiebedarf für die Erwärmung des Behälterinhalts auf die geforderte Prozesstemperatur wirkungsvoll vermindert. Im Grenzfall kann dieser Ener giebedarf bei reiner Dampfphase im Reaktor auf nahezu Null reduziert werden.
- Die Absicherung der Prozessanlage zur Vermeidung oder zur Beherrschung instabiler Betriebszustände ist weitaus einfacher. Bei Leckagen im System ist eine Gefahr der lokalen Dampfbildung - wie in Heißwasseranlagen - nicht gegeben.
- Der Zeitbedarf für Befüllung und Entleerung ist gegenüber der Verfahrensweise mit teilweise oder vollständig geflutetem Reaktionsbehälter wesentlich niedriger.
- Durch Minimierung der Reaktionswassermenge verringert sich auch der Umfang des anfallenden und zu entsorgenden Abwassers.
- Durch Vorkonditionierung des Einsatzmaterials (Substrat = Rohbiomasse) mittels mit Katalysator dotiertem Wasser vor Beginn des Reaktionsvorganges kann der Reaktionsprozess wesentlich beschleunigt und die Produktivität der gesamten Anlage nachhaltig gesteigert werden.
- Das Druckniveau des Reaktors wird durch die erforderliche Reaktionstemperatur bestimmt. Eine Anhebung des Behälterdrucks über diesen Wert - wie es bei dem hydrothermalen Prozess aus sicherheitstechnischen Gründen unabdingbar ist - entfällt bei dem hier vorgeschlagenen Verfahren.
- Unkontrollierte Erhöhungen des Behälterdrucks werden durch Öffnen eines Überdruckventils begrenzt.
- Bei starker exothermer Reaktion kann durch Eindüsen von Flüssigkeit ein unkontrollierter Temperaturanstieg verhindert werden.
- Eine starke Erwärmung durch exotherme Reaktionen des zeitweilig entstandenen H₂ kann durch Entnahme des H₂ gedämpft oder vollständig vermieden werden
- Bei gezielter Prozessführung lässt sich zu dem Hauptprodukt Kohle auch noch als Nebenprodukt H₂ gewinnen, das als zusätzlicher Energieträger oder Grundstoff verwendet wird.
- Durch Kombination der Carbonisierung mittels Dampf mit einer Heißgascarbonisierung lässt sich das Niveau der Reaktionstemperatur über den Grenzwert der Siedetemperatur hinaus steigern. Damit wird die Reaktion nachhaltig intensiviert und die Leistung des Reaktors wesentlich gesteigert.
- Die im Reaktionswasser nach der Reaktion enthaltene Restwärme kann zu einem erheblichen Anteil auf hohem Temperaturniveau ausgekoppelt und einem externen Wärmeverbraucher zugeführt oder für die Vorwärmung der Biomasse vor Einbringen in den Reaktionsbehälter verwendet werden.
- Das aus dem Behälter entnommene Reaktionswasser kann nach Reinigung und Aufbereitung als Speisewasser dem für die Dampfversorgung betriebenen Kessel zugeleitet werden.

### Bezugszeichenliste

- 1: Reaktionsbehälter
- 2: Substratkorb
- 3: Dampferzeuger
- 4: Heizdampfleitung
- 5: Wassereindüsung
- 6: Sicherheitsventil
- 7: Kühlstufe 1
- 8: Heißwasserkreislauf
- 9: Druckreduzierventil
- 10: Kühlstufe 2
- 11: Warmwasserkreislauf
- 12: Abwasserreinigung
- 13: Reststoffe aus Abwasserreinigung
- 14: Restabwasser
- 15: Kondensatrückführpumpe
- 16: Wasseraufbereitung (Entgaser)
- 17: Kesselspeisepumpe
- 18: Schauglas am Reaktor
- 19: Gasabsetzbehälter
- 20: Heißgasgebläse
- 21: Dampfinjektor
- 22: Heißgaszufuhr
- 23: Ablassventil
- 24: Kühler
- A: Eingangskammer
- B: Ausgangskammer
- K1: Klappe 1
- K2: Klappe 2

## Patentansprüche

1. Verfahren zur Erzeugung von Kohle aus Biomasse mittels thermaler Karbonisierung umfassend die Schritte:
- Zerkleinern der Biomasse,
- Einfüllen der Biomasse in einen Reaktionsbehälter,
- Zuführung eines Mediums in den Reaktionsbehälter,
- Druckanhebung,
- Erwärmung,
- Druck- und Temperaturhaltung während der Reaktionsphase,
- Druck- und Temperaturabsenkung nach der Reaktion und
- Entnahme der erzeugten Kohle aus dem Behälter,
wobei das Verfahren von Beginn an ohne eine Flüssigphase von Wasser durchgeführt wird, und wobei das zugeführte Medium ausschließlich gasförmig oder dampfförmig ist,
**dadurch gekennzeichnet, dass**
das während der Reaktion als Zwischenprodukt gebildete H₂-Gas aus dem Prozess entnommen wird.

2. Verfahren nach Anspruch 1, **dadurch gekennzeichnet, dass** das leichtere H₂-Gas unter dem Einfluss der Schwerkraft von den anderen gasförmigen Komponenten, wie CO₂, N₂, H₂O und O₂ in einem Absetzbehälter getrennt wird, wobei sich das leichtere H₂-Gas unter dem Einfluss der Schwerkraft von den anderen gasförmigen Komponenten trennt, im oberen Teil ansammelt und dort entnommen wird.

3. Verfahren nach Anspruch 1, **dadurch gekennzeichnet, dass** eine Membran zur H₂-Abtrennung eingesetzt wird.

4. Verfahren nach den Ansprüchen 1 bis 3, **dadurch gekennzeichnet, dass** der gasförmige Inhalt des Reaktionsbehälters angesaugt und in eine externe Vorrichtung zur H₂-Abtrennung geleitet wird und anschließend nach erfolgter H₂-Abtrennung in den Reaktionsbehälter zurückgeführt wird.

5. Verfahren nach den Ansprüchen 1 bis 4, **dadurch gekennzeichnet, dass** zur Erwärmung gesättigter oder überhitzter Hochdruckdampf verwendet wird.

6. Verfahren nach den Ansprüchen 1-5, **dadurch gekennzeichnet, dass** zur Erwärmung Heißgas verwendet wird.

7. Verfahren nach wenigstens einem der Ansprüche 1 bis 6, **dadurch gekennzeichnet, dass** der Biomasse vor Beginn der Reaktion ein chemischer Katalysator beigegeben wird.

8. Verfahren nach wenigstens einem der Ansprüche 1 bis 5 und 7, **dadurch gekennzeichnet, dass** während der Reaktionsphase der Druck und die Temperatur bedarfsweise durch Einleiten von zusätzlichem Hochdruckdampf auf dem gewünschten Niveau gehalten werden.

9. Verfahren nach wenigstens einem der Ansprüche 1 bis 8, **dadurch gekennzeichnet, dass** ein eventueller Druckanstieg durch exotherme Reaktionen während des Karbonisierungsprozesses mittels Öffnen eines Sicherheitsventils und Abblasen von Dampf oder Heißgas auf den zulässigen Wert begrenzt wird.

10. Verfahren nach einem der Ansprüche 1 bis 9, **dadurch gekennzeichnet, dass** die Biomasse vor Einbringen in den Reaktionsbehälter mit dem Katalysatormaterial vorbehandelt wird.

## Claims

1. A method for producing coal from biomass by means of thermal carbonization, comprising the steps of:
- crushing the biomass,
- filling the biomass into a reaction vessel,
- supplying a medium into the reaction vessel,
- increasing the pressure,
- heating up,
- maintaining the pressure and temperature during the reaction phase,
- lowering the pressure and temperature after the reaction and
- removing the produced coal from the vessel,
wherein the method is carried out from the beginning without a liquid phase of water and wherein the supplied medium is exclusively gaseous or vapourous,
**characterized in that**
the H₂ gas generated as intermediate product during the reaction is extracted from the process.

2. A method according to claim 1, **characterized in that** the lighter H₂ gas is separated under the influence of gravity from the other gaseous components such as CO₂, N₂, H₂O and O₂ in a settling tank, wherein the lighter H₂ gas separates under the influence of gravity from the other gaseous components, accumulates in the upper part and is extracted from there.

3. A method according to claim 1, **characterized in that** a membrane is used for separating the H₂.

4. A method according to the claims 1 through 3, **characterized in that** the gaseous content of the reaction vessel is aspirated and guided into an external device for the H₂ separation and is afterwards, after the H₂ separation has been completed, returned to the reaction vessel.

5. A method according to the claims 1 through 4, **characterized in that** saturated or overheated high-pressure steam is used for the heating up.

6. A method according to the claims 1 through 5, **characterized in that** hot gas is used for the heating up.

7. A method according to at least one of the claims 1 through 6, **characterized in that** a chemical catalyst is added to the biomass before the reaction starts.

8. A method according to at least one of the claims 1 through 5 and 7, **characterized in that** the pressure and the temperature are kept at the desired levels during the reaction phase, if required, by introducing additional high-pressure steam.

9. A method according to at least one of the claims 1 through 8, **characterized in that** an eventual pressure increase due to exothermal reactions during the carbonization process is limited to the admissible value by means of opening a safety valve and discharging vapour or hot gas.

10. A method according to one of the claims 1 through 9, **characterized in that** the biomass is pre-treated by the catalyst material before being introduced into the reaction vessel.

## Revendications

1. Procédé de production de charbon à partir de biomasse par moyen de carbonisation thermique, comprenant les étapes de :
- fragmenter la biomasse,
- charger la biomasse dans un récipient de réaction,
- amener un médium dans le récipient de réaction,
- augmenter la pression,
- chauffer,
- maintenir la pression et la température pendant la phase de réaction,
- abaisser la pression et la température après la réaction et
- sortir le charbon produit du récipient, le procédé étant exécuté dès le début sans phase liquide d'eau et le médium amené étant exclusivement présent sous forme de gaz ou de vapeur,
**caractérisé en ce que**
le gaz H₂ généré en tant que produit intermédiaire pendant la réaction est extrait du processus.

2. Procédé selon la revendication 1, **caractérisé en ce que** le gaz H₂ plus léger est séparé sous l'effet de la gravité des autres composants gazeux, tels que CO₂, N₂, H₂O et O₂, dans un récipient de dépôt, dans lequel le gaz H₂ plus léger se sépare sous l'effet de la gravité des autres composants gazeux, s'accumule dans la partie supérieure et y est extrait.

3. Procédé selon la revendication 1, **caractérisé en ce qu'**on utilise une membrane pour la séparation de H₂.

4. Procédé selon les revendications 1 à 3, **caractérisé en ce que** le contenu gazeux du récipient de réaction est aspiré et amené dans un dispositif externe destiné à la séparation de H₂ et est ensuite, après la séparation de H₂ achevée, ramené au récipient de réaction.

5. Procédé selon les revendications 1 à 4, **caractérisé en ce qu'**on utilise de la vapeur à haute pression saturée ou surchauffée pour le réchauffement.

6. Procédé selon les revendications 1 à 5, **caractérisé en ce qu'**on utilise du gaz chaud pour le réchauffement.

7. Procédé selon au moins l'une des revendications 1 à 6, **caractérisé en ce qu'**on ajoute un catalyseur chimique à la biomasse avant que la réaction commence.

8. Procédé selon au moins l'une des revendications 1 à 5 et 7, **caractérisé en ce que** la pression et la température sont maintenues au niveau désiré pendant la phase de réaction, le cas échéant, par introduction de vapeur à haute pression supplémentaire.

9. Procédé selon au moins l'une des revendications 1 à 8, **caractérisé en ce qu'**une augmentation de pression éventuelle provoquée par des réactions exothermes pendant le processus de carbonisation est limitée à la valeur admissible en ouvrant une soupape de sécurité et en faisant échapper de la vapeur ou du gaz chaud.

10. Procédé selon l'une des revendications 1 à 9, **caractérisé en ce qu'**on prétraite la biomasse avec la matière de catalyseur avant de la charger dans le récipient de réaction.
